# EUROPÄISCHE PATENTSCHRIFT

(11) **EP 0 662 057 B1**
(45) Veröffentlichungstag und Bekanntmachung des Hinweises auf die Patenterteilung: **12.06.1996**
(21) Anmeldenummer: 93919110.2
(22) Anmeldetag: 20.08.1993
(51) Int. Cl.: B60T 8/40, F04B 49/06, G05D 13/62

(54) **VERFAHREN UND SCHALTUNGSANORDNUNG ZUR REGELUNG DER FÖRDERLEISTUNG EINER HYDRAULIKPUMPE**
PROCESS AND CIRCUIT ARRANGEMENT FOR REGULATING THE FLOW RATE OF AN HYDRAULIC PUMP
PROCEDE ET CIRCUIT POUR REGULER LE DEBIT D'UNE POMPE HYDRAULIQUE

(30) Priorität: 25.09.1992 DE 4232130
(43) Veröffentlichungstag der Anmeldung: 12.07.1995
(73) Patentinhaber: ITT Automotive Europe GmbH, D-60488 Frankfurt am Main (DE)
(72) Erfinder: FENNEL, Helmut, D-65812 Bad Soden (DE); KOLBE, Alexander, D-64846 Gross-Zimmern (DE); HONUS, Klaus, D-60439 Frankfurt am Main (DE)
(74) Vertreter: Blum, Klaus-Dieter, Dipl.-Ing.
(86) Internationale Anmeldenummer: EP9302226
(87) Internationale Veröffentlichungsnummer: WO9407717

(56) Entgegenhaltungen:
- EP-A- 0 270 474
- EP-A- 0 296 444
- EP-A- 0 460 408
- EP-A- 0 543 419
- DE-A- 3 241 039
- DE-A- 4 020 449

## Beschreibung

Die Erfindung bezieht sich auf ein Verfahren zur Anpassung der Förderleistung einer elektromotorisch angetriebenen Hydraulikpumpe einer Bremsanlage mit Blockierschutzregelung (ABS) und Antriebsschlupfregelung durch Bremseneingriff (BASR) an den momentanen Bedarf, bei dem die Hydraulikpumpe durch eine Pulsfolge mit variablen Puls- und/oder Pulspausen-Zeiten angesteuert wird. Eine Schaltungsanordnung zur Durchführung des Verfahrens gehört ebenfalls zur Erfindung.

Die Anpassung der Förderleistung solcher Pumpen an den Bedarf bereitet Schwierigkeiten, wenn die Parameter, die die Förderleistung bestimmen, in weiten Grenzen variieren und wenn der in der jeweiligen Situation benötigte Wert möglichst genau eingestellt werden soll. Beispielsweise tritt bei hydraulischen Bremsanlagen mit ABS und BASR das Problem auf, daß mit Rücksicht auf eine geringe Geräuschentwicklung die Pumpendrehzahl so weit wie möglich, also auf den gerade noch ausreichenden Wert, abgesenkt werden soll. Die Störgrößen, die sich auf die Pumpendrehzahl auswirken, sind jedoch bei Bremsanlagen für Kraftfahrzeuge außerordentlich groß; der Temperaturbereich ist weit, die Versorgungsspannung (Batteriespannung) ist abhängig von dem Ladezustand und dem Alter der Batterie; der Gegendruck, gegen den die Pumpe fördert, ist von der jeweiligen Situation abhängig. Außerdem darf bei Bremsanlagen aus Sicherheitsgründen ein die Funktion gewährleistender Mindestwert in keiner Situation unterschritten werden.

Es wurde bereits vorgeschlagen, bei Bremsanlagen die Förderleistung der Pumpe durch Einschalten eines Vorwiderstandes im BASR-Fall abzusenken, weil grundsätzlich im BASR-Betrieb weniger Energie als im ABS-Modus benötigt wird; eine bedarfsabhängige getaktete Ansteuerung der Pumpe zur Verringerung der Drehzahl und damit der Geräusche im BASR-Betrieb wurde ebenfalls in Erwägung gezogen (DE 41 10 494 A1). Wegen der vorgenannten variablen Parameter und aus Sicherheitsgründen muß jedoch in jedem Fall eine hohe "Reserve" eingeplant werden, mit der Folge, daß die Pumpe grundsätzlich auf eine höhere Förderleistung als tatsächlich benötigt eingestellt werden muß.

Aus der DE-A-3 241 039 ist bereits eine Bremskraftregelanlage für ein Kraftfahrzeug bekannt, das ein Antiblockiersystem (ABS) und einen Bremskraftverstärker (BKV) enthält. Für beide Systeme (ABS und BKV) ist ein gemeinsames Hydroaggregat mit einer elektrisch angetriebenen Hydraulikpumpe vorgesehen. Da der Druckmittelbedarf im ABS-Betrieb sehr viel höher als bei Teilbremsungen liegt, wird der Antriebsmotor der Hydraulikpumpe außerhalb des ABS-Modus, wenn ausschließlich der Bremskraftverstärker im Einsatz ist, über einen Vorwiderstand angesteuert. Auf diese Weise wird dem Umstand Rechnung getragen, daß der Leistungsbedarf des Bremskraftverstärkers z.B. 1 Watt, des ABS z.B. 60 Watt beträgt. Im ABS-Modus wird grundsätzlich die Pumpe mit voller Leistung betrieben.

Eine Schaltungsanordnung zur Steuerung der Drehzahl eines Gleichstromkleinstmotors ist aus der EP-A-0 296 444 bekannt. Nach dieser Schrift wird die Generator-EMK nach Abschalten des Motorstroms gemessen, der Meßwert einer Vergleicherschaltung zugeführt und mit einer Sollgröße, die der gewünschten Drehzahl entspricht, verglichen. Solche Kleinstmotoren werden für den Antrieb zahnärztlicher Werkzeuge, wie Bohrer, Schleifer usw. benötigt.

Schließlich ist aus der EP-A-0 270 474 bereits ein Folgeregelkreis für eine Wärmepumpe bekannt. Es wird die von der Raumtemperatur abhängige Sollgröße einer Geschwindigkeit mit der Ist-Geschwindigkeit verglichen und ein Differenzsignal gewonnen und zur Regelung der Geschwindigkeitkeit eines Kompressormotors ausgewertet. Irgendwelche Anregungen für die Regelung der Hydraulikpumpe einer Bremsanlage mit ABS/BASR sind dieser Schrift nicht zu entnehmen.

Der vorliegenden Erfindung liegt nun die Aufgabe zugrunde, die vorgenannten Nachteile einer Bremsanlage mit ABS und BASR zu überwinden und einen Weg aufzuzeigen, der eine Anpassung der Förderleistung der Pumpe eines solchen Systems an den sehr unterschiedlichen Bedarf in Abhängigkeit von den jeweiligen Bedingungen (ABS- oder BASR-Modus, Straßenzustand etc.) und Störgrößen ermöglicht und der gleichzeitig sicherstellt, daß in jeder Situation der aus Sicherheitsgründen erforderliche Mindestwert zur Verfügung steht; mit Rücksicht auf eine möglichst geringe Geräuschentwicklung sollte die Pumpendrehzahl den gerade noch ausreichenden Wert nur gering überschreiten. Die Anpassung an den momentanen Bedarf sollte mit möglichst geringem Aufwand, jedenfalls ohne Verwendung eines Drehzahlsensors, realisierbar sein.

Es hat sich gezeigt, daß diese Aufgabe durch das im Anspruch 1 beschriebene Verfahren in einfacher, technisch fortschrittlicher Weise gelöst werden kann. Die Besonderheiten des erfindungsgemäßen Verfahrens bestehen darin, daß in einem Schaltkreis ein der Pumpendrehzahl entsprechender Sollwert gebildet wird, daß in einem Folgeregelkreis durch Vergleich des Sollwertes mit einem der tatsächlichen Pumpendrehzahl entsprechenden Istwert eine Differenzgröße ermittelt und aus der Differenzgröße die Pulsfolge zur Ansteuerung der Hydraulikpumpe gebildet wird sowie daß während der Pausenzeiten der Pulsfolge die Generatorspannung des Pumpenmotors gemessen und als Maß für den Pumpendrehzahl-Istwert ausgewertet wird.

Die Ermittlung der Pumpendrehzahl bzw. der Istgröße des Regelkreises aus der Generatorspannung während der "Ausschaltzeit" der Pumpe bzw. der Pulspause des Pumpenansteue rungsignals, d.h. der Pulsfolge, mit der die Pumpe angesteuert wird, stellt einen besonders einfachen Weg dar zur Ermittlung der Istgröße unter Berücksichtigung aller Störgrößen. Der Temperatureinfluß, die Höhe der Batteriespannung, die Belastung der Pumpe, der Verschleiß, usw. - alle diese Faktoren beeinflußen die Drehzahl - werden bei der erfindungsgemäßen Art der Istwert-Ermittlung berücksichtigt. Natürlich ist es auch von Vorteil, daß kein Drehzahlsensor zur Ermittlung der Pumpendrehzahl benötigt wird.

In Anspruch 2 ist eine besonders vorteilhafte Schaltungsanordnung zur Durchführung des Verfahrens nach der Erfindung beschrieben.

Weitere Merkmale, Vorteile und Anwendungsmöglichkeiten der Erfindung gehen aus der folgenden Darstellung weiterer Details anhand der beigefügten Abbildungen hervor.

Es zeigen:
- Fig. 1: in schematischer Darstellung die wichtigsten Komponenten einer Bremsanlage mit ABS und BASR,
- Fig. 2: im Blockschaltbild einen Regelkreis zur Durchführung des Verfahrens nach der Erfindung und
- Fig. 3: im Diagramm den zeitlichen Verlauf der Pumpenspannung in den Pulsdauer- und Pulspausenzeiten.

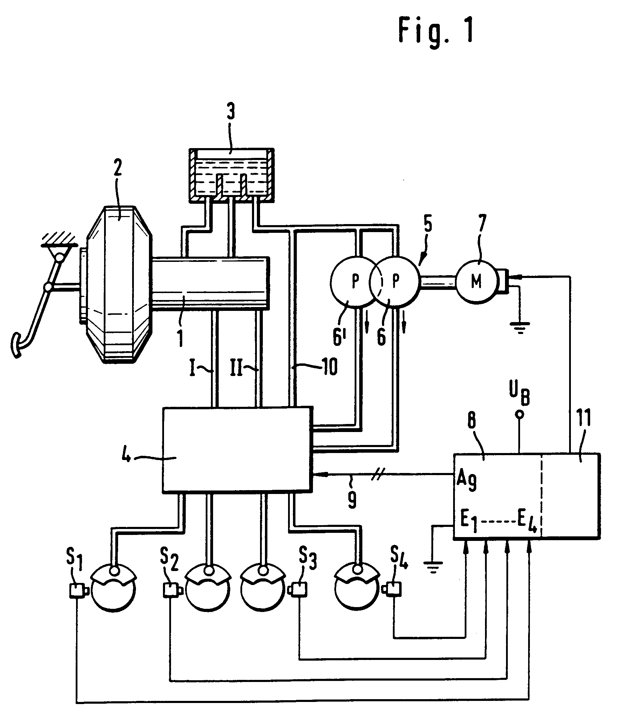

Die Bremsanlage nach Figur 1 besteht im wesentlichen aus einem Tandem-Hauptzylinder 1 mit einem vorgeschaltetem Bremskraftverstärker 2, aus einem Druckausgleichs- und Vorratsbehälter 3 und aus einem Druckmodulator 4. Außerdem sind zur Hilfsdruckerzeugung ein Motorpumpenaggregat 5 mit einer Hydraulikpumpe 6 und mit einem elektrischen Antriebsmotor 7 vorhanden. Der Hauptzylinder 1 hat zwei hydraulisch getrennte Bremskreise I, II, an die die Radbremsen über (nicht gezeigte) Hydraulikventile z.B. in diagonaler Aufteilung oder in Schwarz/Weiß-Aufteilung angeschlossen sind. Zur Hilfsdruckversorgung sind ein Motorpumpenaggregat 5 mit einer zweikreisigen Hydraulikpumpe 6,6' und mit einem gemeinsamen elektrischen Antriebsmotor 7 vorhanden. Die hydraulische Trennung der Bremskreise I, II wird also auch bei der Hilfsdruckversorgung aufrechterhalten; die Pumpe 6 ist dem Bremskreis I, die Pumpe 6' dem Bremskreis II zugeordnet.

Es handelt sich bei dem dargestellten Ausführungsbeispiel um ein sogenanntes "offenes" System, bei dem das in der Druckabbauphase aus den Radbremsen abgeleitete Druckmittel über eine Rückflußleitung 10 in den Behälter 3 der Bremsanlage, an den auch die Saugseiten der Pumpen 6,6' angeschlossen sind, zurückfließt. Bei einem "geschlossenen" System, für das die Erfindung gleichermaßen gilt, wird mit den Hydraulikpumpen das aus den Radbremsen abgeleitete Druckmittel unmittelbar in den zugehörigen Bremskreis oder in den Hauptzylinder der Bremsanlage zurückgefördert. Bremsanlagen mit offenen und geschlossenen hydraulischen Systemen sind in vielfältiger Ausbildung bekannt, weshalb es sich hier erübrigt, auf weitere Details einzugehen.

Zu der Bremsanlage nach Figur 1 gehört ein elektronischer Regler 8, der vor allem die Aufgabe hat, die mit Hilfe von Radsensoren S₁ bis S₄ gewonnenen Informationen über das Drehverhalten der einzelnen Fahrzeugräder auszuwerten und Bremsdrucksteuersignale zu erzeugen. Diese Bremsdrucksteuersignale werden über einen Ausgang A₉ dem Bremsdruckmodulator 4 zugeführt. Symbolisch dargestellt ist in Figur 1 eine Mehrfachleitung 9, über die Radventile, nämlich Einlaß- und Auslaßventile, die Bestandteil des Modulator 4 sind, angesteuert werden. Üblicherweise werden elektromagnetisch betätigbare Mehrwegeventile verwendet, die je nach Regelphase den Bremsdruck in den Radbremsen konstanthalten, abbauen und wieder erhöhen. In BASR-Modus wird mit diesen Magnetventilen zunächst der Druckmittelweg von den Radbremsen zu dem Hauptzylinder 1 gesperrt und dann mit Hilfe der Hydraulikpumpen 6,6' der benötigte Bremsdruck aufgebaut und über die Magnetventile des Druckmodulators 4 zu den Antriebsrädern weitergeleitet. Die Regelung des Antriebsschlupfes geschieht mit Hilfe der Einlaß- und Auslaßventile, die auch zur ABS-Regelung dienen.

U_{B} symbolisiert den Anschluß des Reglers 8 und - über diesen Regler - des Pumpenmotors 7 an die elektrische Stromversorgung, d.h. direkt oder über einen Spannungsregler an die Fahrzeugbatterie. Die Komponenten der erfindungsgemäßen Schaltungsanordnung, die zur Ansteuerung des Pumpenmotors 7 und zur Anpassung der Pumpen-Förderleistung dienen, sind in eine Pumpenansteuerung 11 zusammengefaßt.

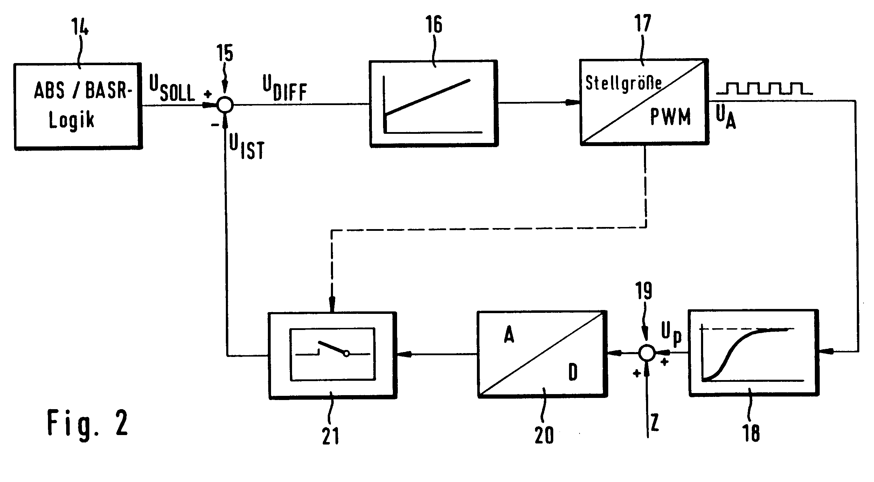

Einen den Ablauf des erfindungsgemäßen Verfahrens wiedergebenden Folgeregelkreis zeigt Figur 2. Dieser Regelkreis bestimmt die Arbeitsweise der Pumpenansteuerung 11, die in Figur 1 als gestrichelt abgegrenzter Teil der Reglerschaltung 8 symbolisch dargestellt ist.

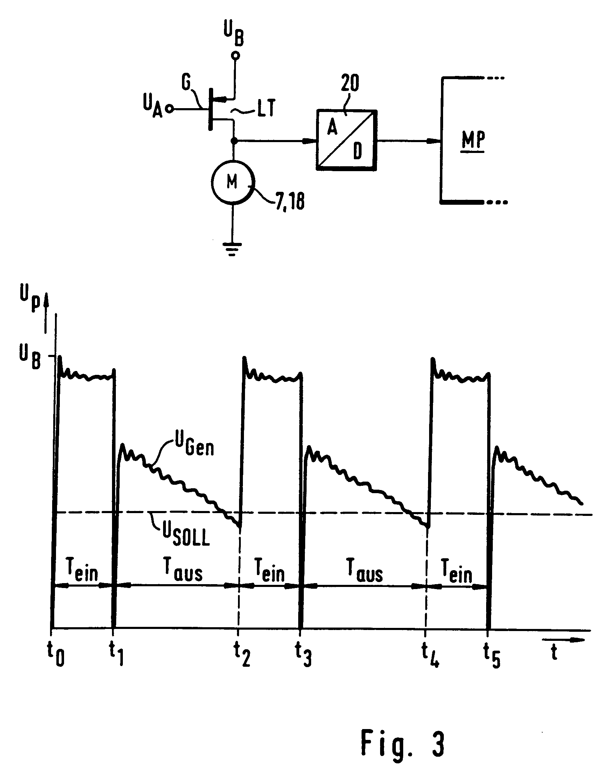

Zur Sollgrößenvorgabe der Pumpendrehzahl, d.h. des Pumpenansteuerungssignals oder einer entsprechenden Größe U_{SOLL} dient ein Schaltkreis 14. Die ABS-/BASR-Logik ermittelt diese Sollgröße U_{SOLL}. Nach Vergleich mit dem entsprechenden Istwert U_{IST} in einer Verzweigung 15 wird eine Differenzgröße U_{DIFF} gebildet und diese Größe über ein Regler 16 einem Stellglied 17 zugeführt. Das Stellglied 17 bestimmt die Pulsfolge U_{A} bzw. die Pulsdauer-/Pulspausenzeiten des Pumpenansteuersignals. Der Pumpenmotor, dem das Ausgangssignal U_{A} des Stellgliedes 17, nämlich die Ansteuerungs-Pulsfolge zugeführt wird, ist in dem Regelkreis mit 18 symbolisiert. Die über der Pumpe 18 abfallende Spannung Uₚ, die auch die Informationen über die Störgrößen Z enthält - symbolisch dargestellt durch die Verzweigung 19 - wird im vorliegenden Ausführungsbeispiel nach Wandlung mit einem A/D-Wandler 20 über einen Schalter 21 zur Verzweigung 15 zurückgeführt und dient als Maß für den Motordrehzahl-Istwert U_{IST}. Das symbolisch als Schalter 21 dargestellte Glied im Regelkreis hat die Aufgabe, den Informationsweg während der Einschaltzeit Tₑᵢₙ (siehe Fig. 3) des Pumpenmotors 18 ("7" in Fig.1) zu unterbrechen, weil erfindungsgemäß nur die Generatorspannung U_{Gen} während der Ausschaltzeit Tₐᵤₛ der Pumpe zur Bestimmung des Drehzahl-Istwertes U_{IST} ausgewertet wird.

In einem bevorzugten Ausführungsbeispiel der Erfindung ist der beschriebene Regelkreis durch Programmierung eines oder mehrerer Mikrocomputer MP (siehe Fig. 3) oder Mikrocontroller, die die gesamte ABS- und BASR-Regelung bestimmen, ausgeführt. Mit bekannten Mitteln könnte die Regelung natürlich auch durch festverdrahtete Schaltkreise realisiert werden.

Figur 3 zeigt den typischen Spannungsverlauf an den Klemmen des Pumpenmotors 7 bei Ansteuerung der Pumpe mit einer Pulsfolge. Die Meßanordnung ist ebenfalls symbolisch dargestellt. Mit LT ist ein Leistungstransistor bezeichnet, an dessen Steuerelektrode G die Ausgangsspannung U_{A} des Stellgliedes 17 nach Figur 2 anliegt und der im Takt der Pulsfolge U_{A} den Antriebsmotor 7 der Hydraulikpumpe ein- und ausschaltet. Die über der Pumpe abfallende Spannung U wird über den Wandler 20 (siehe Figur 2) dem Mikrocontroller MP zur weiteren Verarbeitung zugeführt.

Nach dem Diagramm gemäß Figur 3 ist die Pumpe zum Zeitpunkt t₀ eingeschaltet. An den Klemmen der Pumpe liegt folglich für die Zeitspanne Tₑᵢₙ (nahezu) die volle Batteriespannung U_{B}. Die Pulspause der Pulsfolge beginnt zum Zeitpunkt t₁. Die während der Pulspausenzeiten Tₐᵤₛ der Ansteuer-Pulsfolge weiterlaufende Pumpe wirkt nun als Generator. Nach einem kurzzeitigen Spannungseinbruch zum Zeitpunkt t₁ liegt an den Pumpenklemmen eine kontinuierlich abnehmende Spannung U_{Gen}. Zum Zeitpunkt t₂ folgt der nächste Einschaltpuls.

Die Generatorspannung U_{Gen} wird erfindungsgemäß als Istwert U_{IST} mit dem von der ABS-/BASR-Logik 14 (siehe Fig. 2) vorgegebenen Sollwert U_{SOLL} verglichen. Die Differenz U_{DIFF} wird, wie bereits beschrieben, im Regelkreis zur Korrektur der Pumpenansteuerungs-Pulsfolge ausgewertet.

## Patentansprüche

1. Verfahren zur Anpassung der Förderleistung einer elektromotorisch angetriebenen Hydraulikpumpe einer Bremsanlage mit Blockierschutzregelung (ABS) und Antriebsschlupfregelung durch Bremseneingriff (BASR) an den momentanen Bedarf,
- bei dem die Hydraulikpumpe durch eine Pulsfolge (U_{A}) mit variablen Puls- und oder Pulspausen-Zeiten angesteuert wird,
**dadurch gekennzeichnet,**
- daß in einem Schaltkreis (14) ein der Pumpendrehzahl entsprechender Sollwert (U_{SOLL}) gebildet wird,
- daß in einem Folgeregelkreis durch Vergleich des Sollwertes (U_{SOLL}) mit einem der tatsächlichen Pumpendrehzahl entsprechenden Istwert (U_{IST}) eine Differenzgröße (U_{DIFF}) ermittelt und
- aus der Differenzgröße (U_{DIFF}) die Pulsfolge (U_{A}) zur AnSteuerung der Hydraulikpumpe (18) gebildet wird sowie
- daß während der Pausenzeiten der Pulsfolge (U_{A}) die Generatorspannung (U_{Gen}) des Pumpenmotors (7,18) gemessen und als Maß für den Pumpendrehzahl-Istwert (U_{Ist}) ausgewertet wird.

2. Schaltungsanordnung zur Durchführung des Verfahrens nach Anspruch 1, **dadurch gekennzeichnet,** daß diese einen Schaltkreis (14) zur Erzeugung eines Pumpendrehzahl-Sollwertes (U_{SOLL}) und einen Folgeregelkreis umfaßt, in dem der Pumpendrehzahl-Sollwert (U_{SOLL}) mit dem PumpendrehzahlIstwert (U_{IST}) verglichen und der Differenzwert (U_{DIFF}) über einen Regler (16) einem Stellglied (17), das die Pulsfolge (U_{A}) zur Pumpenansteuerung erzeugt, zugeführt wird, sowie daß die während der Pulspausen-Zeiten durch den Antriebsmotor (7, 18) der Hydraulikpumpe (5) erzeugte Generatorspannung (U_{GEN}) als Maß für den Pumpendrehzahl-Istwert (U_{IST}) ausgewertet und zum Vergleich mit dem Pumpendrehzahl-Sollwert (U_{SOLL}) zurückgeführt wird.

## Claims

1. A method of adjusting the flow rate of an electromotively driven hydraulic pump for a brake system including anti-lock control (ABS) and traction slip control by brake management (BASR) to the instantaneous requirements,
- wherein the hydraulic pump is activated by a pulse train (U_{A}) having variable pulse times and/or times of pulse break,
**characterized in that**
- a nominal value (U_{SOLL}) representative of the rotational pump speed is determined in a control circuit (14),
- a difference value (U_{DIFF}) is determined in a subsequent control circuit by comparing the nominal value (U_{SOLL}) with an actual value (U_{IST}) representative of the actual rotational pump speed, and
- the pulse train (U_{A}) for the activation of the hydraulic pump (18) is formed of the difference value (U_{DIFF}), and
- the generator voltage (U_{Gen}) of the pump motor (7, 18) is measured during the times of pulse break of the pulse train (U_{A}) and is evaluated as a standard of the actual value (U_{IST}) of the rotational speed of the pump.

2. A circuit configuration for implementing the method as claimed in claim 1,
**characterized** in that there is provided a control circuit (14) for generating a nominal value (U_{SOLL}) of the rotational speed of the pump, and a subsequent control circuit in which the nominal value (U_{SOLL}) of the rotational speed of the pump is compared with the actual value (U_{IST}) of the rotational speed of the pump and the difference value (U_{DIFF}), through a controller (16), is delivered to a control element (17) which generates the pulse train (U_{A}) for the pump activation, and in that the generator voltage (U_{Gen}) which is generated by the drive motor (7, 18) of the hydraulic pump (5) during the times of pulse break is evaluated as a standard of the actual value (U_{IST}) of the rotational speed of the pump and is returned for comparison with the nominal value (U_{SOLL}) of the rotational speed of the pump.

## Revendications

1. Procédé permettant d'adapter au besoin du moment le débit d'une pompe hydraulique à entraînement par moteur électrique qui fait partie d'un système de freinage à régulation antiblocage (ABS) et à régulation du glissement de traction par intervention des freins (BASR), selon lequel la pompe hydraulique est commandée au moyen d'un train d'impulsions (U_{A}) présentant des durées d'impulsion et/ou des durées d'intervalle entre impulsions qui sont variables, caractérisé :
- en ce qu'une valeur de consigne (U_{CONS}) correspondant à la vitesse de rotation de la pompe est formée dans un circuit (14),
- en ce qu'une valeur de différence (U_{DIFF}) est établie dans un circuit de régulation en cascade par comparaison de la valeur de consigne (U_{CONS}) à une valeur réelle (U_{REE}) correspondant à la vitesse de rotation effective de la pompe et,
- à partir de la grandeur de différence (U_{DIFF}), le train d'impulsions (U_{A}) servant à commander la pompe hydraulique (18) est formée et
- en ce que, pendant les durées d'intervalle entre impulsions du train d'impulsions (U_{A}), la tension de générateur (U_{GEN}) du moteur de pompe (7, 18) est mesurée et est exploitée en tant que mesure pour la valeur réelle (U_{REE}) de la vitesse de rotation de pompe.

2. Agencement de circuit permettant la mise en oeuvre du procédé selon la revendication 1, caractérisé en ce que cet agencement comprend un circuit (14) de production d'une valeur de consigne de vitesse de rotation de pompe (U_{CONS}) et un circuit de régulation en cascade dans lequel la valeur de consigne de vitesse de rotation de pompe (U_{CONS}) est comparée à la valeur réelle de vitesse de rotation de pompe (U_{REE}) et la valeur de différence (U_{DIFF}) est envoyée, par l'intermédiaire d'un régulateur (16), à un organe de réglage (17) qui produit le train d'impulsions (U_{A}) servant à la commande de pompe et en ce que la tension de générateur (U_{GEN}) produite par le moteur (7, 18) d'entraînement de la pompe hydraulique (5) pendant les durées d'intervalle entre impulsions est exploitée en tant que mesure pour la valeur réelle de vitesse de rotation de pompe (U_{REE}) et est renvoyée en vue de la comparaison à la valeur de consigne de vitesse de rotation de pompe (U_{CONS}).
